# EUROPEAN PATENT APPLICATION

(11) **EP 4 822 621 A1**
(43) Date of publication of application: **14.10.2026**
(21) Application number: 26165631.8
(22) Date of filing: 17.03.2026
(51) Int. Cl.: G06Q 10/08, G06Q 10/083, G06Q 10/109, G08G 1/00

(54) **TRANSPORT CHASSIS AND INTERMODAL CONTAINER LOGISTICS MANAGEMENT SYSTEM**

(30) Priority: 31.03.2025 US 202519095991
(71) Applicant: BlackBerry Limited, Waterloo, Ontario N2K 0A7 (CA)
(72) Inventor: JANTZI, Jason Wayne, Waterloo, ON, N2K 0A7 (CA); FULESHWAR PRASAD, Mahendra, Waterloo, ON, N2K 0A7 (CA); OVERTON, Kelley Dean, Waterloo, ON, N2K 0A7 (CA)
(74) Representative: MERH-IP Matias Erny Reichl Hoffmann Patentanwälte PartG mbB

(57) **Abstract**

A method of managing a supply of transport chassis to pick-up intermodal containers at a transshipment point. The method comprises identifying transport chassis stacks located at the transshipment point by an application executing on a computer system, wherein each transport chassis stack comprises at least one transport chassis; analyzing each of the identified transport chassis stacks by the application to determine a count of transport chassis in the transport chassis stack; for each transport chassis, determining an idle time of the transport chassis by the application, wherein the idle time of the transport chassis is determined based on a duration of time from when the transport chassis arrived at the transshipment point and a current time; building a transport chassis idle report by the application based on the idle times of the transport chassis; and transmitting the transport chassis idle report by the application.

## Description

### BACKGROUND

Electronic devices may be mounted to transport chassis to determine a location of the transport chassis and report that location to an application, whereby the application is able to track the location of the transport chassis and other like equipped transport chassis. This information may be made available to freight shippers and/or transportation companies. The transport chassis may be configured to accept intermodal shipping containers such that containers on a container ship arrived in port may be moved onto the transport chassis, and the transport chassis driven by a tractor or truck cab to a final destination of the container. Such containers may also be transported on train cars to a railyard, the container removed from the train car, moved from the train car onto the transport chassis, and the transport chassis driven by a tractor or truck cab to a final destination of the container. Containers can likewise be picked up and installed on a transport chassis, driven by a tractor or truck cab to a railyard or port, the container removed from the transport chassis, and the container placed upon a train car or on a container ship for transport.

### SUMMARY

In an embodiment, a method of managing a supply of transport chassis to pick-up intermodal containers at a transshipment point is disclosed. The method comprises defining a boundary area by a user interface executing on a user equipment (UE), wherein the boundary area is co-located with the transshipment point; defining a carrier in-bound to the transshipment point by the user interface on the UE, wherein the carrier is carrying a plurality of intermodal containers; and, in response to receiving an input selection, transmitting a request for a report on a supply of transport chassis by the UE to a transport chassis management application executing on a computer system, wherein the request comprises a boundary area definition and a carrier definition, whereby the transport chassis management application determines a number of transport chassis disposed within the boundary area, determines a number of intermodal containers disposed on the carrier, and returns to the UE the report on the supply of transport chassis that indicates the number of transport chassis disposed within the boundary area and the number of intermodal containers disposed on the carrier. The method further comprises receiving by the UE the report on the supply of transport chassis; and, based on the report on the supply of transport chassis, presenting by the user interface of the UE an indication of a correlation between the number of transport chassis disposed within the boundary area and the number of intermodal containers disposed on the carrier.

In another embodiment, a method of managing a supply of transport chassis to pick-up intermodal containers at a transshipment point is disclosed. The method comprises, in response to receiving a request for a transport chassis idle report, identifying transport chassis stacks located at the transshipment point by a transport chassis management application executing on a computer system, wherein each transport chassis stack comprises at least one transport chassis; and analyzing each of the identified transport chassis stacks by the transport chassis management application to determine a count of transport chassis in the transport chassis stack. The method further comprises, for each transport chassis, determining an idle time of the transport chassis by the transport chassis management application, where the idle time of the transport chassis is determined based on a duration of time from when the transport chassis arrived at the transshipment point and a current time; building the transport chassis idle report by the transport chassis management application based on the idle times of the transport chassis; and transmitting the transport chassis idle report by the transport chassis management application.

In yet another embodiment, a system for managing a supply of transport chassis to pick-up intermodal containers at a transshipment point. The system comprises a processor; a non-transitory memory; and an application stored in the non-transitory memory. When executed by the processor, the application tracks a status of transport chassis stacks at each of a plurality of transshipment points, tracks movement of intermodal containers en route to the plurality of transshipment points, and receives a request for a report on a supply of transport chassis at one of the transshipment points, wherein the request identifies the one of the transshipment points and identifies a carrier of intermodal containers en route to the identified one of the transshipment points. The application further determines a number and type of transport chassis disposed at the identified one of the transshipment points, determines a number and type of intermodal containers associated with the identified carrier of intermodal containers en route to the identified one of the transshipment points, and, for each type of intermodal container associated with the identified carrier of intermodal containers en route to the identified one of the transshipment points, determines if a sufficient number of transport chassis of matching type are disposed at the identified one of the transshipment points. The application further generates a report about the numbers of transport chassis of matching types at the identified one of the transshipment points versus the numbers of intermodal containers associated with the identified carrier of intermodal containers en route to the identified one of the transshipment points; and transmits the report on the supply of transport chassis at the one of the transshipment points.

These and other features will be more clearly understood from the following detailed description taken in conjunction with the accompanying drawings and claims.

### BRIEF DESCRIPTION OF THE DRAWINGS

For a more complete understanding of the present disclosure, reference is now made to the following brief description, taken in connection with the accompanying drawings and detailed description, wherein like reference numerals represent like parts.
FIG. 1A is an illustration of a plurality of transport chassis in a park staking configuration according to an embodiment of the disclosure.
FIG. 1B is an illustration of a plurality of transport chassis in a road staking configuration according to an embodiment of the disclosure.
FIG. 2 is a block diagram of an electronic device according to an embodiment of the disclosure.
FIG. 3A is a block diagram of a system that determines and reports transport chassis stacking configuration information according to an embodiment of the disclosure.
FIG. 3B is another block diagram of the system that determines and reports transport chassis stacking configuration information according to an embodiment of the disclosure.
FIG. 4 is a flow chart of a method according to an embodiment of the disclosure.
FIG. 5A and FIG. 5B is a block diagram of a system for transport chassis and intermodal container logistics management according to an embodiment of the disclosure.
FIG. 6 is a flow chart of another method according to an embodiment of the disclosure.
FIG. 7 is a flow chart of yet another method according to an embodiment of the disclosure.
FIG. 8 is a block diagram of a computer system according to an embodiment of the disclosure.

### DETAILED DESCRIPTION

It should be understood at the outset that although illustrative implementations of one or more embodiments are illustrated below, the disclosed systems and methods may be implemented using any number of techniques, whether currently known or not yet in existence. The disclosure should in no way be limited to the illustrative implementations, drawings, and techniques illustrated below, but may be modified within the scope of the appended claims along with their full scope of equivalents.

The present disclosure teaches a system for transport chassis and intermodal container logistics management. A transport chassis may be referred to with different terms such as a container chassis, an intermodal chassis, or a skeletal trailer. The transport chassis is a kind of semi-trailer designed to receive and carry intermodal shipping containers. In the transportation of intermodal containers, it is desirable to minimize the dwell time of containers while en route to a final destination. To this end, it is desirable to closely track on-location and off-location inventory of transport chassis. For example, it is desirable for a railyard operator to accurately determine if the number of containers carried by an in-bound freight train that are to be unloaded at the railyard matches to or is exceeded by a number of transport chassis on hand in the railyard. It is desirable to accurately determine how many truck drivers are needed to hitch-up to the transport chassis after they are loaded with containers to drive the containers promptly to their shipping destination.

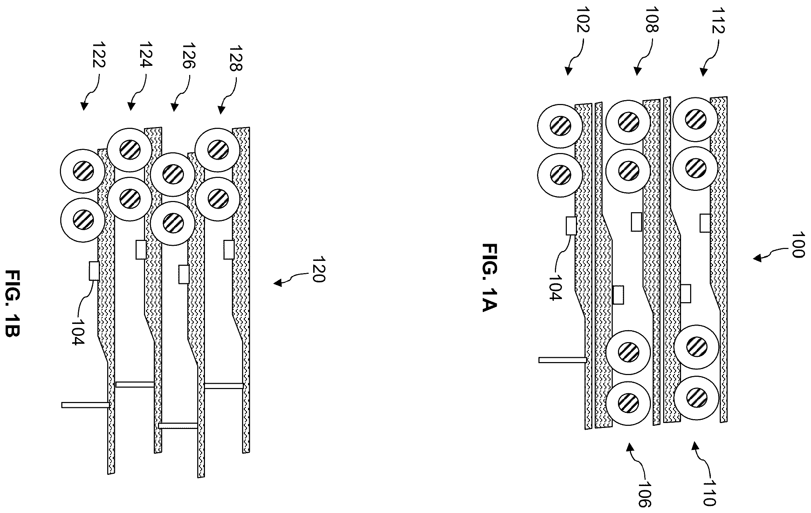

Transport chassis may be stacked to save space when parked at a railyard or at a port. A chassis park stacking configuration may comprise up to five transport chassis stacked together. A first chassis may have its wheels on the ground in a rightside-up orientation. A second chassis may be stacked upside down on top of the first chassis, flipped upside down, with its wheels at an opposite end of the stack of chassis from the wheels of the first chassis. A third chassis may be stacked rightside-up on top of the second chassis, with its wheels at an opposite end of the stack from the wheels of the second chassis. A fourth chassis may be stacked upside down on top of the third chassis, with its wheels at an opposite end of the stack of chassis from the wheels of the third chassis. A fifth chassis may be stacked rightside up on top of the fourth chassis, with its wheels at an opposite end of the stack from the wheels of the fourth chassis. See FIG. 1A for an illustration of a chassis park stacking configuration.

Transport chassis may be stacked for dead-headed transportation back to a railyard or to a port. A chassis road stacking configuration may comprise up to four transport chassis. A first chassis may have its wheels on the ground in a rightside up orientation. A second chassis may be stacked rightside up on top of the first chassis. A third chassis may be stacked rightside up on top of the second chassis. A fourth chassis may be stacked rightside up on top of the third chassis. See FIG. 1B for an illustration of a chassis road stacking configuration. This road stacking configuration is suitable for a tractor or cab hitching up to the first chassis and driving the road stacked four transport chassis to a use point (e.g., to a railyard or a port). It is understood that the chassis park stacking and chassis road stacking configurations may be known by different names in different operating regions.

Currently, an operator of a railyard may need to send a worker to one or more chassis stacks out in the railyard to count the transport chassis arranged in a chassis park stacking configuration and to record their configuration. This may involve determining and recording the serial number or other unique identity of the transport chassis. The worker then would report back their recording to the railyard operator (the terminal building or main office building), and this information may be entered into a record system or computer for processing. This process is subject to human error and entails the cost and time lags associated with a manual process performed, at least partly, by a human worker. A like manual process may be used by a port operator to count transport chassis arranged in a chassis park stacking configuration and to record their configuration. A similar manual process may be employed by a trucking company to count transport chassis arranged in a chassis road stacking configuration and to record their configuration. The present disclosure teaches a particular technical solution to the technical problem of determining transport chassis inventory at different sites.

In an embodiment, each transport chassis may have an electronic device mounted to the structure of the chassis. In some contexts, the electronic device may be referred to as a radar gateway device or as an asset tracking device. The electronic device may comprise one or more radio transceiver, an accelerometer and gyro, an altimeter, an optional radar ranging sensor (e.g., a mmWave radar sensor), a memory, a processor, and an application stored in the memory that may be executed by the processor. The application can analyze information produced by the accelerometer and gyro to determine an orientation of the transport chassis to which the electronic device is mounted. The application can analyze information produced by the altimeter to determine an elevation of the transport chassis to which the electronic device is mounted. The electronic device can transmit the orientation and elevation information via the radio transceiver to a dashboard application executing on a computer system that analyzes the information, along with like information from like electronic devices mounted to other transport chassis in the same chassis stack, to determine the count of chassis and the configuration of the chassis in the given chassis stack. The dashboard application can then provide access to this information to railyard operators and/or port operators. In an embodiment, the optional mmWave radar sensor may determine a distance between a given chassis and a neighboring chassis, and this distance information can be used to determine the chassis stacking configuration.

In an embodiment, the electronic devices mounted to chassis in a chassis stack may establish a short-range wireless network and intercommunicate with each other. These electronic devices may be able to distinguish the chassis co-located in a chassis stack from other electronic devices associated with chassis in a separate chassis stack because the separate chassis stack may be outside the range of the short-range wireless network and hence do not participate in the network. These electronic devices in the chassis stack may share their orientation and elevation information, and one of the electronic devices may assume a leadership or master role. The master electronic device may analyze the information provided by all the electronic devices in the chassis stack to determine the count of chassis in the chassis stack and to determine the configuration of the chassis stack. The master electronic device may then transmit the count of chassis and chassis stack configuration information via a cellular radio transceiver to a dashboard application executing on a computer system, and the dashboard can provide access to this information to railyard operators and/or port operators.

The dashboard can present the information about configurations of stacks of transport chassis and counts of transport chassis in a stack with current real-time or near real-time information. Thus, as transport chassis are added to a stack or removed from a stack, the dashboard can present the new count information. It will be appreciated that when a transport chassis is removed from a park stacking configuration at a railyard or at a port, for example to couple with a tractor or truck and to drive to a container unload area to be loaded with a container, the count or transport chassis remaining in the chassis stack is reduced. The dashboard can be requested to run different logistics reports that assist personnel in managing the movement of transport chassis and containers to achieve desired shipping goals. These shipping goals can include minimizing dwell time for containers to be loaded onto a transport chassis and driven on the next leg of its journey, minimizing idle time of transport chassis waiting to receive containers at railyards or ports, avoiding multiple movements of containers (e.g., avoiding removing a container from a railcar, placing the container in an out-of-the-way location while waiting for a transport chassis, possibly blocking the container in by other like containers waiting for a transport chassis, later moving the blocking containers, and then loading the container on its transport chassis - an operation that involves multiple lifting and movement operations on the container when only one such operation would have been needed if the transport chassis had been present at the time of unloading from the railcar), and minimizing fees imposed by the railyards and/or ports. Dwell time of a container is the time the container is stored at a transshipment point (e.g., removed from a ship or from a railcar and stationed on the ground at the transshipment point) before it is loaded onto a transport chassis for driving the next leg of its shipping journey. Idle time of a transport chassis is time the transport chassis is parked at a transshipment point before being loaded with an intermodal container.

The dashboard can be requested to run a report that determines matches between in-bound intermodal containers to transport chassis at a transshipment point, for example at a railyard or at a port. The request can identify a transshipment point and one or more in-bound carrier that is loaded with one or more containers. A carrier may be a train composed of one or more railcars loaded with one or more containers. A carrier can be a ship loaded with one or more containers. The dashboard can access one or more application programming interfaces (APIs) of shipping operators to obtain information on in-bound containers. The information can include the different types of containers and the numbers of each different type of container loaded on the subject carrier. The information can include an estimated time of arrival (ETA) of the carrier at the subject transshipment point. With this information, the dashboard can identify a match between transport chassis already pre-positioned at the transshipment point and in-bound transport chassis. The matching can take into consideration compatibility of types of containers and types of transport chassis, for example lengths of containers and transport chassis, for example types of coupling mechanisms and/or securing mechanisms of containers and transport chassis. For each different container type associated with the in-bound carrier, the dashboard can report if matching transport chassis are estimated to be available timely (at a time that allows loading a container off of the carrier and onto the transport chassis without the need to temporarily store the container at the transshipment point). To make this determination and to report this finding, the dashboard is able to analyze and count transport chassis in each transport chassis type on hand at the transshipment point and transport chassis in each transport chassis type in-bound to the transshipment point with an ETA that dove-tails with the ETA of the in-bound carrier. This report can enable personnel to timely identify a short-fall of transport chassis at the transshipment point and take action to scramble more transport chassis of the one or more needed types to redress this short-fall before the in-bound carrier arrives at the transshipment point, saving operating costs and speeding the passage of goods in the containers to their ultimate destination.

The dashboard can be requested to run a report that identifies idle time of transport chassis at transshipment points while waiting for containers and that identifies dwell time of containers at the transshipment point while waiting for transport chassis. Both the idle time of transport chassis and the dwell time of containers is desirably kept to a minimum, and this report can be used by personnel and operating companies to monitor, control, and minimize the idle time of transport chassis and the dwell time of containers. The dashboard can analyze data that has been collected and stored in a data store to make these determinations. The report can be run for a single transport chassis operator, for a single container operator, for a single transshipment point, and any combination of two or more of these. The report can be run for multiple chassis operators, for multiple container operators, for multiple transshipment points, and any combination of two or more of these. The report can provide information on the accumulated costs of transport chassis idle time. The report can provide information on the accumulated costs of container dwell time (e.g., fees paid to transshipment point operators, fees paid by container operators for delayed delivery of goods to end destinations, etc.).

The dashboard can be requested to run a report on the location of one or more containers in temporary storage at a transshipment point, including information on other containers that may need to be moved to access the container(s) of interest that are blocked in by the other containers. The request can identify a transshipment point and one or more containers, for example by identifying a tracking identity associated with the container. The dashboard can access an API of a container tracking application of a container operator to determine the physical location of the container and other containers proximate to the container(s) of interest.

Turning now to FIG. 1A, a park stacking configuration of transport chassis 100 is described. In an embodiment, the park stacking configuration of transport chassis 100 comprises up to five transport chassis. As illustrated in FIG. 1A, the park stacking configuration of transport chassis 100 comprises a first transport chassis 102, a second transport chassis 106, a third transport chassis 108, a fourth transport chassis 110, and a fifth transport chassis 112. Each of the transport chassis 102, 106, 108, 110, 112 has an electronic device 104 mounted to the transport chassis. While shown as mounted in a specific location on the transport chassis 102, 106, 108, 110, 112 in FIG. 1A, the electronic device 104 may be mounted to the transport chassis in different locations. In an embodiment, the park stacking configuration of transport chassis 100 may have fewer than five transport chassis. In an embodiment, the park stacking configuration of transport chassis 100 may have more than five transport chassis but fewer than twenty transport chassis.

In the park stacking configuration of transport chassis 100, some of the transport chassis are oriented upside down (e.g., chassis 106 and chassis 110) and the others of the transport chassis are oriented rightside up (e.g., chassis 102, 108, 112). The transport chassis which are in upside down orientation have their wheels disposed at an opposite end of the park stacking configuration of transport chassis 100 (e.g., disposed at the right side) from the end of the parking stacking configuration of transport chassis 100 where the wheels of the transport chassis in rightside up orientation (e.g., disposed at the left side).

Turning now to FIG. 1B, a road stacking configuration of transport chassis 120 is described. In an embodiment, the road stacking configuration of transport chassis 120 comprises up to four transport chassis. As illustrated in FIG. 1B, the road stacking configuration of transport chassis 120 comprises a sixth transport chassis 122, a seventh transport chassis 124, an eighth transport chassis 126, and a ninth transport chassis 128. Each of the transport chassis 122, 124, 126, 128 has an electronic device 104 mounted to the transport chassis. The electronic device 104 may be mounted at a different location than the positions illustrated in FIG. 1B. In an embodiment, the road stacking configuration of transport chassis 120 may have fewer than four transport chassis. In an embodiment, the road stacking configuration of transport chassis 120 may have more than four transport chassis and less than ten transport chassis. In the road stacking configuration, the transport chassis 122, 124, 126, 128 are all oriented rightside up. The positions of the transport chassis 124, 126, 128 may be staggered as illustrated to allow wheels to nest layer-to-layer.

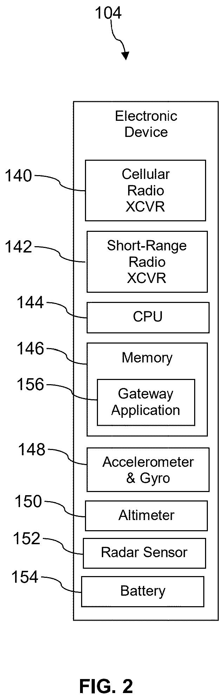

Turning now to FIG. 2, the electronic device 104 is described. As mentioned before, in some contexts, the electronic device 104 may be referred to by other terms such as a radar gateway device or an asset tracking device. In an embodiment, the electronic device 104 comprises a cellular radio transceiver 140, a short-range radio transceiver 142, a processor 144, a memory 146, an accelerometer and gyro 148, an altimeter 150, optionally a radar sensor 152, and a battery 154. In an embodiment, a non-transitory portion of the memory 146 stores a gateway application 156. The cellular radio transceiver 140 may be configured to establish a wireless communication link with a cell site according to a 6G, a 5G, a Long-Term Evolution (LTE), a Code Division Multiple Access (CDMA), a Global System for Mobile communication (GSM), an Enhanced Data rates for GSM Evolution (EDGE), and/or a Universal Terrestrial Radio Access Network (UTRAN) telecommunications protocol.

The short-range radio transceiver 142 may be configured to establish a wireless communication link according to a Bluetooth, a WiFi, a ZigBee, a Bluetooth Low Energy (BLE), an IEEE 801.15, or other short-range wireless communication protocol. In an embodiment, the short-range radio transceiver 142 may be able to establish a wireless link with another radio at a distance of a maximum of 200 feet, a maximum of 150 feet, a maximum of 100 feet, a maximum of 75 feet, a maximum of 50 feet, a maximum of 40 feet, a maximum of 35 feet, or some other maximum range less than 300 feet. By contrast, in an embodiment, the cellular radio transceiver 140 may be able to establish a wireless link with a cell site at a distance of a maximum of 20 miles, a maximum of 15 miles, a maximum of 10 miles, a maximum of 7 miles, a maximum of 5 miles, a maximum of 3 miles, or some other maximum range greater than 1 mile. In an embodiment, some instances of the electronic device 104 may have only the short-range radio transceiver 142 and may not have the cellular radio transceiver 140.

The processor 144 may comprise one or more microprocessor, microcontroller, digital signal processor (DSP), application specific integrated circuit (ASIC), field programmable gate array (FPGA), or other forms of semi-conductor implemented logic processors. In an embodiment, the processor 144 is communicatively coupled to the cellular radio transceiver 140, the short-range radio transceiver 142, the memory 146, the accelerometer and gyro 148, the altimeter 150, and the optional radar sensor 152. The battery 154 may be coupled to each of the components 140, 142, 144, 146, 148, 150, 152 of the electronic device 104, whereby to provide electric power to those components. The battery 154 may be a replaceable battery and/or a rechargeable battery. In an embodiment, the electronic device 104 further comprises circuitry to recharge the battery 154 from an external source of power.

The accelerometer and gyro 148 may be a multi-axis accelerometer. The accelerometer and gyro 148 may comprise 3-axis accelerometer and a 3-axis gyro scope. The accelerometer and gyro 148 may output a signal for each axis of acceleration and a signal from each axis or rotation that can be analyzed by the processor 144. Alternatively, the accelerometer and gyro 148 may analyze the indications of its axes, generate a single signal or digital message that represents the combination of the separate acceleration indications of the multiple axes, and transmit the signal or message to the processor 144. The altimeter 150 outputs a signal that can be analyzed by the processor 144 to determine an elevation of the electronic device 104 (and by implication the elevation of the transport chassis to which the electronic device 104 is mounted). Alternatively, the altimeter 150 analyzes indications of elevation, generates a signal or message that represents the elevation determined by the altimeter 150, and transmits the signal or message to the processor 144. In an embodiment, the altimeter 150 senses air pressure and provides elevation information that is based on the sensed air pressure. In an embodiment, the altimeter 150 may send raw sensor data that must be converted by the processor 144 and/or by the gateway application 156 to an equivalent elevation. Alternatively, in another embodiment, the altimeter 150 may convert pressure sensor data to an equivalent or related elevation and output the elevation information. The altimeter 150 may be said in some contexts to sense barometric pressure. The optional radar sensor 152 may employ a mmWave transceiver to determine a distance between the electronic device 104 and a proximate surface, such as an adjacent transport chassis. The radar sensor 152 may send an indication of the distance to the processor 144.

In an embodiment, the electronic unit 104 determines a location of the electronic unit 104 that serves as a proxy for the location of the transport chassis to which the electronic unit 104 is mounted. In an embodiment, the electronic unit 104 may comprise a global navigation satellite system (GNSS) chip or a global positioning system (GPS) chip that determines location based on signals received from satellites, and the GNSS chip or GPS chip may provide the location of the electronic unit 104. In another embodiment, the electronic unit 104 may determine its location using triangulation location techniques based on received signal strength of radio signals received by the cellular radio transceiver 140 from a plurality of cell sites. The electronic unit 104 may rely on GNSS chip or GPS chip location information at some times and rely on cell site triangulation techniques to locate itself at other times. In some circumstances, for example when the electronic unit 104 is mounted to a transport chassis that is disposed under one or more other transport chassis (as may happen when in a transport chassis stack), signals from satellites may be unavailable to the GNSS chip or GPS chip and in this circumstance the chip may be unable to determine location.

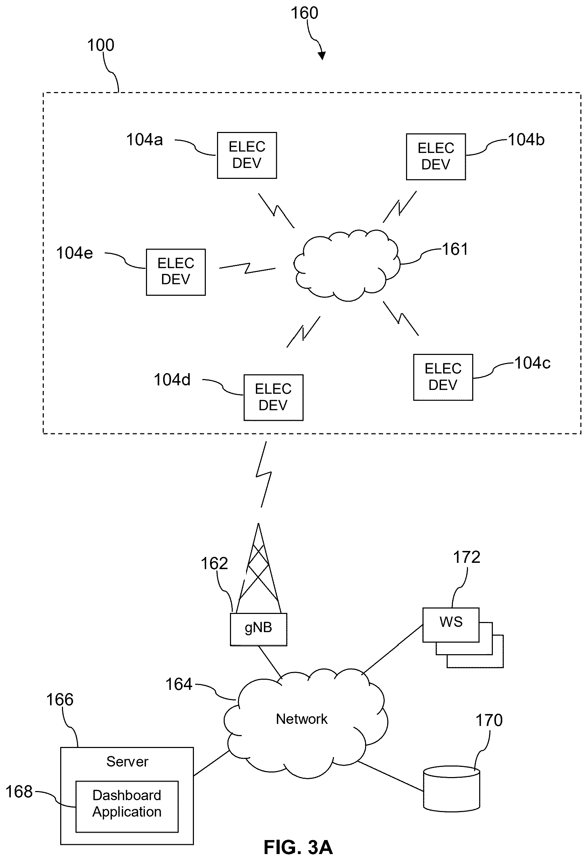

Turning now to FIG. 3A, a system 160 is described. The system 160 comprises the park stacking configuration of transport chassis 100 illustrated in FIG. 1A. The system 160 comprises a first electronic device 104a mounted to the first transport chassis 102, a second electronic device 104b mounted to the second transport chassis 106, a third electronic device 104c mounted to the third transport chassis 108, a fourth electronic device 104d mounted to the fourth transport chassis 110, and a fifth electronic device 104e mounted to the fifth transport chassis 112. The electronic devices 104a, 104b, 104c, 104d, 104e may establish a short-range wireless network 161 via their short-range radios 142. In an embodiment, the short-range wireless network 161 is a mesh network where each electronic device 104a, 104b, 104c, 104d, 104e may wirelessly communicate directly with any of the other electronic devices 104a, 104b, 104c, 104d, 104e. Alternatively, in another embodiment, the short-range wireless network 161 may be a hub-and-spoke network where one electronic device, for example the third electronic device 104d, operates as a hub of the short-range wireless network 161 and other electronic devices wirelessly communicate via the electronic device operating as the hub (e.g., electronic device 104d).

The electronic devices 104a, 104b, 104c, 104d, 104e are able to distinguish electronic units 104 mounted to transport chassis in their park stacking configuration of transport chassis 100 from transport chassis disposed outside of their transport chassis stack - both individual transport chassis and transport chassis disposed in a different transport chassis stack. In some cases, the short-range radio transceivers 142 may not receive any radio signals from proximate electronic devices 104 attached to transport chassis outside of their own transport chassis stack, due to the maximum range limitation of the short-range radio 142. In other cases, the short-range radio transceivers 142 are able distinguish electronic devices 104 in their own transport chassis stack from other electronic devices 104 attached to transport chassis located outside their own transport chassis stack by a determination of received signal strength of the short-range radios 142 of electronic units 104 mounted to transport chassis located outside of their own transport chassis stack are below a predefined threshold received signal strength value.

At least one of the electronic devices 104a, 104b, 104c, 104d, 104e has a cellular radio transceiver 140 and is able to establish a cellular radio link with a cell site 162. As illustrated in FIG. 3A, fourth electronic device 104d has established a cellular communication link with the cell site 162, but it is understood others of the electronic devices 104a, 104b, 104c, 104e may also be able to establish a cellular communication link with the cell site 162 or with a different cell site. The cell site 162 is communicatively coupled to a network 164, and the cell site 162 provides communication coupling between the network 164 and the cellular radio transceiver 140 of one or more of the electronic devices 104a, 104b, 104c, 104d, 104e. The network 164 comprises one or more private networks, one or more public networks, or a combination thereof.

In an embodiment, a computer (server) 166 is communicatively coupled to the network 164 and is communicatively coupled, via the network 164, to a data store 170. The computer 166 executes a dashboard application 168. In an embodiment, the computer 166 may be provided by a cloud computing provider as leased computing resources, such as Amazon Web Services (AWS). The dashboard application 168 may execute on a virtual server in a cloud computing environment. In an embodiment, the data store 170 may be provided by a cloud computing provider as leased storage resources.

Each of the electronic devices 104a, 104b, 104c, 104d, 104e is able to sense the orientation and the elevation of the transport chassis to which it is attached. For example, each electronic device 104a, 104b, 104c, 104d, 104e is able to determine whether the transport chassis to which it is mounted is oriented rightside-up (e.g., oriented as transport chassis 102, 108, and 112 in FIG. 1A) or is oriented upside-down (e.g., oriented as transport chassis 106 and 110 in FIG. 1A). In a rightside-up orientation, a transport chassis has its wheels on an underside or downwards of a frame or bed of the transport chassis; and in an upside-down orientation, a transport chassis has its wheels above or upwards from a frame or bed of the transport chassis.

The information about orientation and elevation of transport chassis from each of the electronic devices 104a, 104b, 104c, 104d, 104e can be analyzed to determine a count of transport chassis in the transport chassis stack and to determine a stacking configuration of the transport chassis stack. In an embodiment, this analysis may be performed by one or more of the electronic devices 104a, 104b, 104c, 104d, 104e. The electronic device 104d may then transmit the count and transport chassis stack configuration information via the cellular radio transceiver 140, via the cell site 162, via the network 164 to the computer 166. The count and transport chassis stack configuration information can also include identifications of the transport chassis, for example serial numbers of the transport chassis and/or license tags of the transport chassis. The count and the transport chassis stack configuration information can also include a location of the electronic device 104a, 104b, 104c, 104d, 104e (e.g., the location serves as a proxy for the location of the electronic device and hence a proxy for the location of the transport chassis stack). The dashboard application 168 can store this count and stack configuration information in the data store 170 and make this information available to users. It will be appreciated that the dashboard application 168 may be receiving count and transport chassis stack configuration information from transport chassis stacks disposed in many different locations (e.g., in railyards, in ports, in trucking depots, and along the roadways and highways), and thus the information stored in the data store 170 may provide a comprehensive information on location and disposition of a great number of transport chassis over a wide area or region.

In an embodiment, the system 160 comprises a plurality of user workstations 172. Users can use the workstations 172 to log into a user interface of the dashboard application 168 to determine counts of transport chassis and transport chassis stack configurations at different railyards and/or ports. The information and access by users via the workstations 172 to the dashboard application 168 promotes improved coordination among container ships, railroad operators, and transport chassis and trucking companies, whereby to minimize delays of transporting intermodal containers via transport chassis. Shortages of transport chassis sometimes develop in particular locations, and the system 160 described herein can help avert and avoid such shortages.

In another embodiment, however, the information about orientation and elevation (and optionally count and location information) of transport chassis from each of the electronic devices 104a, 104b, 104c, 104d, 104e can be transmitted by the fourth electronic device 104d via the cellular communication link to the cell site 162, via the cell site to the network 164, and via the network 164 to the computer 166. Then the dashboard application 168 can analyze the collected information to determine counts of transport chassis in a stack and to determine a stacking configuration.

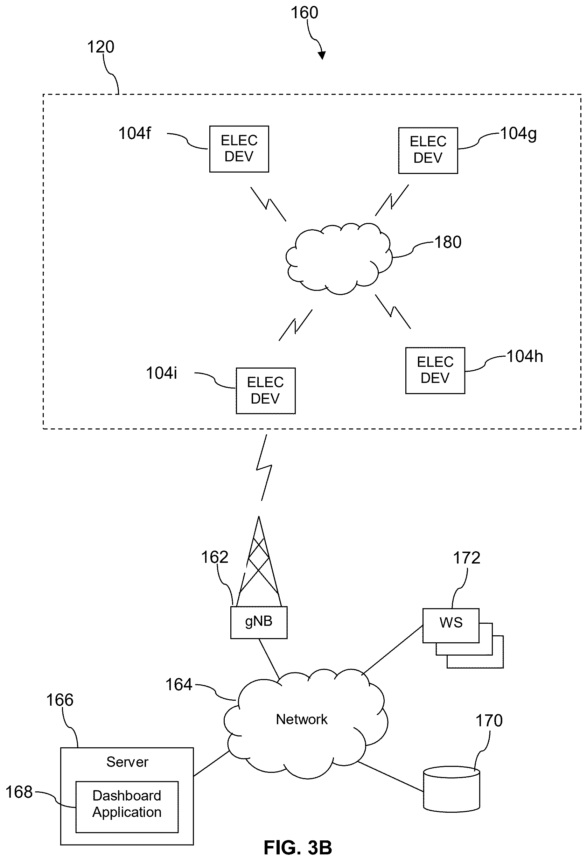

Turning now to FIG. 3B, the system 160 further comprises the road stacking configuration of transport chassis 120. The operation of the system 160 is substantially similar to that described with reference to FIG. 3A above, just that in FIG. 3B the transport chassis are arranged in a road stacking configuration. The system 160 comprises a sixth electronic device 104f mounted to the sixth transport chassis 122, a seventh electronic device 104g mounted to the seventh transport chassis 124, an eighth electronic device 104h mounted to the eighth transport chassis 126, and a ninth electronic device 104i mounted to the ninth transport chassis 128. The electronic devices 104f, 104g, 104h, 104i may establish a short-range wireless network 180 via their short-range radios 142. In an embodiment, the short-range wireless network 180 is a mesh network where each electronic device 104f, 104g, 104h, 104i may wirelessly communicate directly with any of the other electronic devices 104f, 104g, 104h, 104i. Alternatively, in another embodiment, the short-range wireless network 180 may be a hub-and-spoke network where one electronic device, for example the ninth electronic device 104i, operates as a hub of the short-range wireless network 180 and other electronic devices wirelessly communicate via the electronic device operating as the hub (e.g., electronic device 104i).

The electronic devices 104f, 104g, 104h, 104i are able to distinguish electronic units 104 mounted to transport chassis in their road stacking configuration of transport chassis 100 from transport chassis disposed outside of their transport chassis stack - both stacked transport chassis and unstacked, individual transport chassis. As described above, the electronic devices 104f, 104g, 104h, 104i are able to collect elevation and orientation information. One of the electronic devices 104f, 104g, 104h, 104h may analyze this elevation and orientation information, determine a count and stacking configuration of the transport chassis to which the electronic devices 104f, 104g, 104h, 104i are mounted, and send this count and stacking configuration determination via a cellular communication link to the cell site, via the network 164, to the computer 166 and the dashboard application 168. The one of the electronic devices 104f, 104g, 104h, 104i may also send transport chassis identification information and location information via the cellular communication link to the dashboard application 168 in the same way. The dashboard application 168 may store the information provided in the data store 170.

It will be appreciated that the system and methods disclosed may take a variety of different forms than as described above. For example, in an embodiment, the system 160 may produce a count of transport chassis in a stack of transport chassis without further determining whether the transport chassis are disposed in a road stacking configuration or a park stacking configuration. The raw count of transport chassis in the stack of transport chassis can be useful and beneficial even without specifically identifying the stack as being a park stacking configuration or a road stacking configuration. Additionally, in an embodiment, the electronic device 104 may comprise only a single radio transceiver. The single radio transceiver may be a short-range radio transceiver. The electronic device 104, in this embodiment of a single radio transceiver, may simply off-load information relevant to count determination and stacking configuration via the short-range radio transceiver to a hand-held device employed by a worker located in a port or in a railyard. The electronic device 104, in this embodiment of a single radio transceiver, may off-load the count and the determined stacking configuration via the short-range radio to a hand-held device. Alternatively, the single radio transceiver may be a cellular radio transceiver, and the electronic device 104 may off-load information relevant to count determination and stacking configuration information via the cellular radio transceiver to a computer system that does the determination of count and stacking configuration. Alternatively, the single radio transceiver may off-load the count and the determined stacking configuration via the cellular radio transceiver to a computer system (i.e., in this embodiment, the electronic unit determines the count and the stacking configuration).

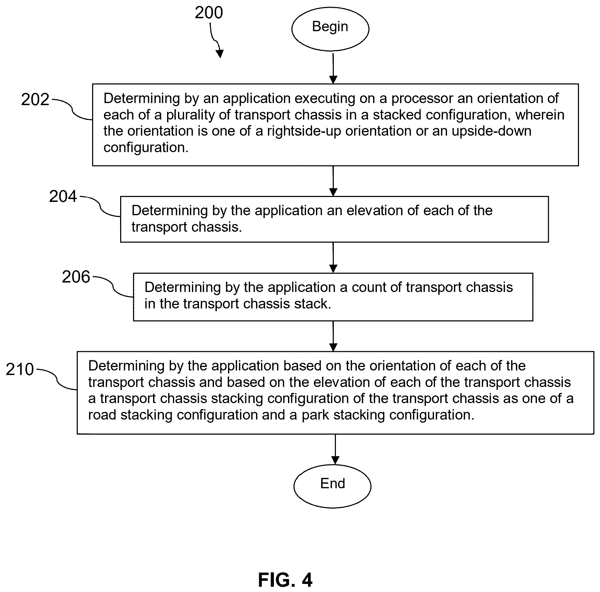

Turning now to FIG. 4, a method 200 is described. In an embodiment, the method 200 is a method of determining a transport chassis stacking configuration. At block 202, the method 200 comprises determining by an application executing on a processor an orientation of each of a plurality of transport chassis in a stacked configuration, wherein the orientation is one of a rightside-up orientation or an upside-down configuration.

At block 204, the method 200 comprises determining by the application an elevation of each of the transport chassis. At block 206, the method 200 comprises determining by the application a count of transport chassis in the transport chassis stack.

At block 210, the method 200 comprises determining by the application based on the orientation of each of the transport chassis and based on the elevation of each of the transport chassis a transport chassis stacking configuration of the transport chassis as one of a road stacking configuration and a park stacking configuration.

In an embodiment, the processing of method 200 may be performed by the electronic unit 104. For example, one of a plurality of electronic units mounted to transport chassis disposed in a stack of transport chassis can receive information from the other electronic units in the stack of transport chassis and perform the processing of blocks 202-210. The electronic unit 104 can then transmit the count information and stacking configuration information to the computer 166 and the dashboard application 168.

In an embodiment, an electronic unit is mounted to each of the transport chassis of the plurality of transport chassis different from the first transport chassis, further comprising the first electronic unit establishing wireless communication links with each of the electrics units mounted to each of the transport chassis different from the first transport chassis, receiving by the application information about elevation from each of the electronic units mounted to each of the transport chassis different from the first transport chassis, receiving by the application information about orientation from each of the electronic units mounted to each of the transport chassis different from the first transport chassis. In an embodiment, the application determines the orientation of each of the transport chassis in the stacked configuration based on the information about orientation received by the application from each of the electronic units mounted to each of the transport chassis different from the first transport chassis and based on information about orientation of the first transport chassis received by the application from an accelerometer and gyro of the first electronic unit. In an embodiment, wherein the application determines the elevation of each of the transport chassis in the stacked configuration based on the information about elevation received by the application from each of the electronic units mounted to each of the transport chassis different from the first transport chassis and based on information about elevation of the first transport chassis received by the application from an altimeter of the first electronic unit.

In an embodiment, the application is executed on a computer located remote from the plurality of transport chassis, wherein the application determines the orientation of each transport chassis based on an output of an accelerometer and gyro in an electronic unit mounted on the transport chassis and determines the elevation of each transport chassis based on an output of an altimeter in the electronic unit mounted on the transport chassis.

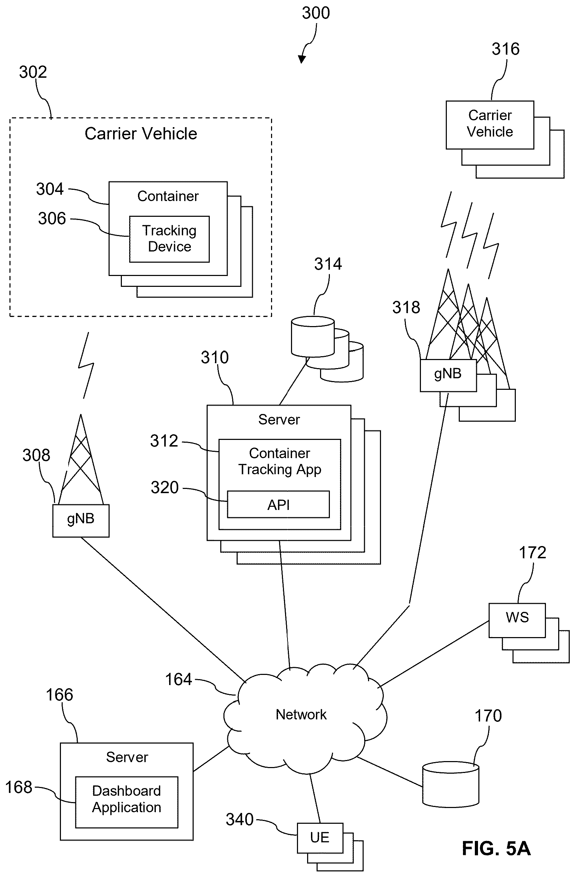

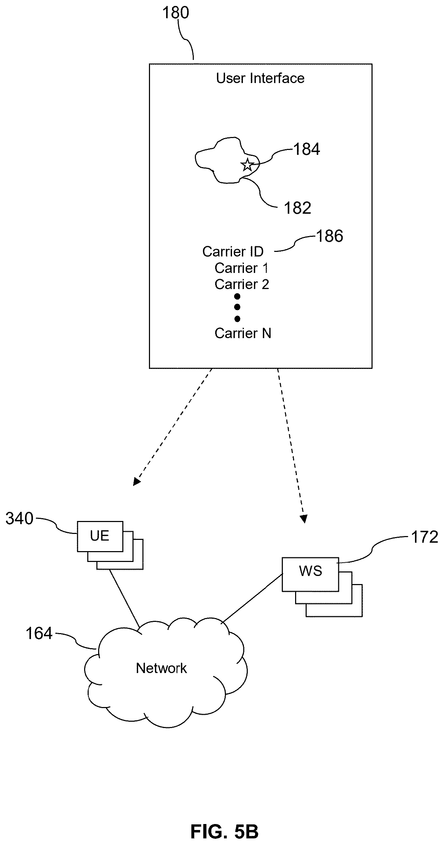

Turning now to FIG. 5A and FIG. 5B, a system 300 is described. The system 300 comprises the network 164, the computer system 166 executing the dashboard application 168, the data store 170, and the workstations 172 described with reference to FIG. 3A, FIG. 3B, and FIG. 4 above. The system 300 may further comprise the cell site 162 and one or more of the park stacking configuration of transport chassis 100 described with reference to FIG. 2 and FIG. 3A above. The system 300 may further comprise the cell site 162 and one or more of the road stacking configuration of transport chassis 120 described with reference to FIG. 2 and FIG. 3B above.

The system 300 further comprises additional items associated with carrier vehicles and intermodal containers loaded on the carrier vehicles. The system 300 comprises a first carrier vehicle 302 that is loaded with one or more intermodal containers 304, wherein the containers 304 have a tracking device 306 coupled to the container 304 that provides tracking information via a wireless link to a computer system 310, for example via a wireless link to a cell site 308. It is understood that the tracking device 306 may support different wireless communication types including satellite wireless communication, cellular wireless communication, WiFi wireless communication, and other kinds of wireless communication. The tracking device 306 comprises a wireless radio transceiver to engage in wireless communication. The tracking device 306, in an embodiment, is implemented as a computer and has a processor and a memory that stores a tracking application that may be executed by the processor. The tracking device 306 comprises a location device, for example a GNSS chip or GPS chip that determines location based on signals received from satellites. The tracking device 306 transmits information about a location of the container 304, an identify of the container, and optionally additional information. The optional additional information may comprise an owner or leaser of the container 304. The optional additional information may comprise a manifest of the contents of the container 304. The optional additional information may comprise a final shipping destination of the container 304 and a person designated to receive the contents of the container 304.

The computer system 310 executes an intermodal container tracking application 312. The system 300 may comprise a plurality of computer systems 310 each executing an intermodal container tracking application 312 and a plurality of data stores 314 that store data about carrier vehicles 302 and containers 304. Each different computer system 310 executing the container tracking application 312 may be associated with a different intermodal container operating company or intermodal container leasing company. The system 300 comprises any number of additional carrier vehicles 316, each of which is loaded with one or more intermodal container 304 having a tracking device 306 coupled to it. The tracking devices 306 coupled to the containers 304 on the carrier vehicles 316 may communicate wirelessly via cell sites 318 or other wireless transceivers (e.g., satellites and satellite ground stations, WiFi access points, or other wireless access points) to the network 164.

The container tracking application 312 can maintain location information on containers 304 and/or carrier vehicles 302 and store this information in the data store 314. The container tracking application 312 provides an API 320 that can be invoked by the dashboard application 168 to determine the locations and ETAs of carrier vehicles 302, 316 and/or containers 304 at any of a plurality of different transshipment points.

In an embodiment, the dashboard 168 is able to receive requests from workstations 172 and/or from user equipment (UE) 340 for reports. The UEs may be any combination of mobile phones, smart phones, personal digital assistants (PDAs), wearable computers, headset computers, laptop computers, notebook computers, tablet computers, or electronic pads. The dashboard 168 can analyze data in the data store 170 and/or obtained by communicating with electronic devices 104 coupled to transport chassis and/or obtained by communicating with the API 320 of the container tracking application 312. A first report may be a report about the matching of transport chassis on-hand (or soon to be on-hand) at a transshipment point and in-bound containers. A second report may be about idle time of transport chassis and/or dwell time of containers at a transshipment point. A third report may be about a location of where one or more containers are located at a transshipment point and locations of other containers that may be blocking access to the one or more containers.

The requests for reports can identify one or more transshipment points, one or more carrier vehicles 302, 316 in-bound to the transshipment point. The requests for reports can identify one or more containers related to the report. The reports can include additional information such as identities of transport chassis, location of transport chassis, owner of transport chassis, identities of containers, location of containers, owner of containers, and other information. The carrier vehicles 302, 316 may be any combination of trains and ships. For example, as seen in FIG. 5B, a user interface 180 may be presented on a display of either the UE 340 or the workstation 172. The user interface 180 enables a user to define a boundary area 182 and a transshipment point 184. The user may select a transshipment point 184 from a list of different transshipment points or the user may simply type in the name of the transshipment point 184. The user can define the boundary area 182 by drawing a closed figure in the user interface 180, and the user interface 180 and/or the dashboard application 168 may translate the drawn closed figure into a defined region, for example using a geohash value, using latitude-longitude coordinates for interstices of a bounding polygon, or in another way. The user interface 180 allows the user to define a carrier identity by selecting from a drop-down list of carriers 186 or some other mechanism of the user interface 180. In an embodiment, the user interface 180, in coordination with the dashboard application 168, determines what carriers 302 are en route to or co-located with the transshipment point 184 and presents only these carriers 302 in the drop-down list of carriers 186. By clicking on one of the displayed carrier identities in the drop-down list of carriers 186, the user identifies what carrier 302 or carriers 302 will be analyzed to generate the report.

The dashboard application 168 can distinguish among different types of containers 304 and different types of transport chassis, such that the matching report matches numbers of containers 304 of a first type to numbers of transport chassis of a type to mate with the first type of container, matches numbers of containers 304 of a second type to numbers of transport chassis of a type to mate with the second type of container, matches numbers of containers 304 of a third type to numbers of transport chassis of a type to mate with the third type of container, etc. The type of a transport chassis is determined by type and number of the retaining mechanisms of the transport chassis and type of the container 304 is determined by the type and number of the securing mechanism of the container 304. It is understood that the securing mechanism of the container 304 must mate properly to the securing mechanism of the transport chassis onto which the container 304 is being loaded at the transshipment point. For example, a transport chassis using twist-lock type retaining mechanisms may mate with containers 304 having a twist-lock type securing mechanism; a transport chassis using a pin-lock type retaining mechanism may mate with containers 304 having a pin-lock type securing mechanism. The numbers of retaining mechanisms of a transport chassis may desirably match the number of securing mechanisms on the container 304. In some cases, the type of the transport chassis and the type of the container 304 may further factor in their length: at least in some circumstances, the length of the container 304 must be commensurate with the length of the transport chassis.

The first report (the report matching in-bound containers to transport chassis) can provide an indication of whether the numbers of on-hand transport chassis matches the number of just arriving containers at a future time, for example in three hours, in six hours, in ten hours, in twelve hours, in eighteen hours, or some other time less than three days. The count of on-hand transport chassis can include both the number of transport chassis currently located at the transshipment point and the number of transport chassis projected to be located at the transshipment point at the time the future time that containers are expected to arrive. If the first report projects a short-fall of transport chassis numbers to on-load the arriving containers, the first report can provide a notification or warning in the report itself. In the case of a short-fall of transport chassis numbers, in addition to the report itself, the dashboard application 168 may send a notification of expected short-fall of transport chassis numbers to responsible parties, such as a dispatcher of transport chassis and/or a manager of containers. The notification can be an email, a text message, an IP notification, or other notification that can grab the attention of the responsible person. On the event of learning of the expected short-fall of numbers of transport chassis, adjustments can be made to scramble transit chassis to avoid the expected short-fall and thereby avoid undesirable results such as dwell time of containers at the transshipment point, incurring storage fees at the transshipment point, difficulties related to handling the container(s) multiple times instead of just one time. In an embodiment, the report and/or notifications can include contact information of a transport chassis operating company that can be called to scramble one or more transport chassis to the subject transshipment point.

In an embodiment, the request for the first report can be repeated, as time passes, to get updates based on real-time information reported from transport chassis (e.g., from electronic devices 104) and container location information obtained from the API 320 of the container tracking application 312. Alternatively, the initial request for the first report can stipulate a time interval for report refreshment to the dashboard application 168, and the dashboard application 168 can automatically analyze data and generate an updated first report and send the updated report to the requestor (e.g., one of the workstations 172 or one of the UEs 340). In this way, personnel can monitor and track the evolving logistical situation of transport chassis to in-bound container matching. This may promote a finer coordination between transport chassis movement and in-bound containers such that idle time of transport chassis can be reduced while at the same time maintaining low dwell time of containers.

In an embodiment, the first report can further analyze and indicate if tractors or trucks with their drivers are available to drive the transport chassis away when they are loaded with their associated containers. The first report can indicate an ETA for tractors and/or trucks with their drivers to arrive at the transshipment point. Again, if there is a shortfall of numbers of tractors or trucks to hitch up to transport chassis at the appropriate time at the transshipment point, the dashboard application 168 can indicate this in the first report and further send notifications via email, text, or IP notification to responsible persons, such as a dispatcher of drivers of tractors and/or trucks.

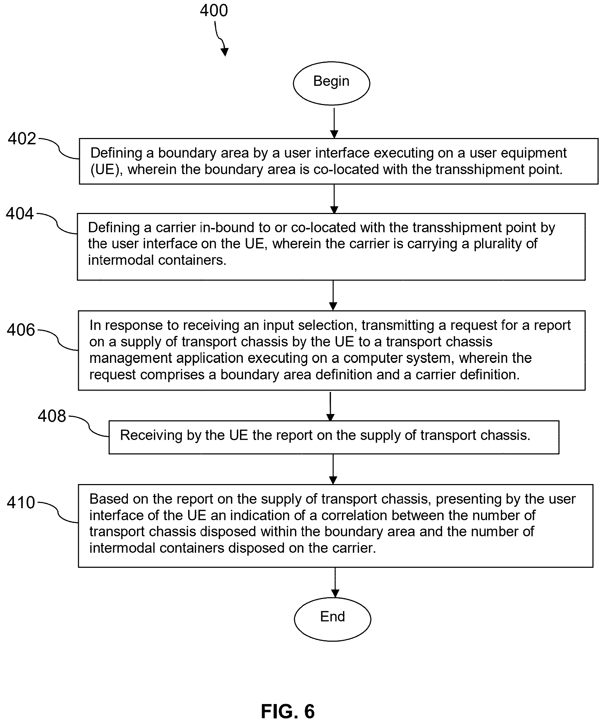

Turning now to FIG. 6 a method 400 is described. In an embodiment, the method 400 is a method of managing a supply of transport chassis to pick-up intermodal containers at a transshipment point. At block 402, the method 400 comprises defining a boundary area by a user interface executing on a user equipment (UE), wherein the boundary area is co-located with the transshipment point. The boundary area may be defined by identifying a particular transshipment point (i.e., identify by name a specific railyard, identify a plurality of specific railyards by name, identify a specific port by name, and/or define a plurality of specific ports by name). The boundary area may be defined by providing a geohash value that encompasses the subject transshipment point. The boundary area may be defined by providing a plurality of latitude-longitude coordinates to identify the interstices of a polygonal boundary. In an embodiment, the boundary may be defined by drawing a boundary on a user interface presented by the UE and/or by a workstation. In an embodiment, the UE is a mobile phone, a smart phone, a personal digital assistant (PDA), a wearable computer, a headset computer, a laptop computer, a notebook computer, a tablet computer, or an electronic pad.

At block 404, the method 400 comprises defining a carrier in-bound to the transshipment point by the user interface on the UE, wherein the carrier is carrying a plurality of intermodal containers. A carrier can be defined by providing the identity of a ship or a train. The user interface of the UE may present a list of carriers that can be selected to define the carrier. The list of carriers may be limited in some way to make the list more useful to a human user, for example listing only carriers en route to transshipment point of interest to the UE. In an embodiment, the carrier is a ship and the transshipment point is a port. In an embodiment, the carrier is a train and the transshipment point is a railyard. A train may comprise a plurality of railcars, and each railcar may carry one or more intermodal containers. For example, a well car typically can carry at least two intermodal containers.

At block 406, the method 400 comprises, in response to receiving an input selection, transmitting a request for a report on a supply of transport chassis by the UE to a transport chassis management application executing on a computer system, wherein the request comprises a boundary area definition and a carrier definition. In an embodiment, the transport chassis management application is thereby enabled to determine a number of transport chassis disposed within the boundary area, determine a number of intermodal containers disposed on the carrier, and return to the UE the report on the supply of transport chassis that indicates the number of transport chassis disposed within the boundary area and the number of intermodal containers disposed on the carrier. In an embodiment, the transport chassis management application determines the number of transport chassis disposed within the boundary area based on the boundary area definition, based on determining a number of transport chassis stacks disposed within the boundary area, and based on determining, for each transport chassis stack, a number of transport chassis in the transport chassis stack. In an embodiment, determining by the transport chassis management application the number of transport chassis disposed within the boundary area comprises determining for each of a plurality of different transport chassis types a number of transport chassis of that type disposed within the boundary area, wherein determining by the transport chassis management application the number of intermodal containers disposed on the carrier comprises determining for each of a plurality of different container types a number of intermodal containers of that type on the carrier, and wherein the report on the supply of transport chassis comprises information on the relationship between the numbers of transport chassis of each type and the numbers of containers of each type associated with the transport chassis type. In an embodiment, the intermodal carriers each has a securing mechanism that is configured for mating with a corresponding securing mechanism of a transport chassis.

At block 408, the method 400 comprises receiving by the UE the report on the supply of transport chassis. At block 410, the method 400 comprises based on the report on the supply of transport chassis, presenting by the user interface of the UE an indication of a correlation between the number of transport chassis disposed within the boundary area and the number of intermodal containers disposed on the carrier. A human using the UE may determine that a shortfall of transport chassis is expected and take action to remedy the expected shortfall, for example by contacting a transport chassis operating company and requesting them to send additional transport chassis to the transshipment point in a timely manner.

In an embodiment, the transport chassis management application determines the number of transport chassis disposed within the boundary area based on the boundary area definition, based on determining a number of transport chassis stacks disposed within the boundary area, and based on determining, for each transport chassis stack, a number of transport chassis in the transport chassis stack. In an embodiment, determining by the transport chassis management application the number of transport chassis disposed within the boundary area comprises determining for each of a plurality of different transport chassis types a number of transport chassis of that type disposed within the boundary area, wherein determining by the transport chassis management application the number of intermodal containers disposed on the carrier comprises determining for each of a plurality of different container types a number of intermodal containers of that type on the carrier, and wherein the report on the relationship between the number of transport chassis disposed within the boundary area and the number of intermodal containers disposed on the carrier comprises information on the relationships between the relationship between the numbers of transport chassis of each type and the numbers of containers of each type associated with the transport chassis type.

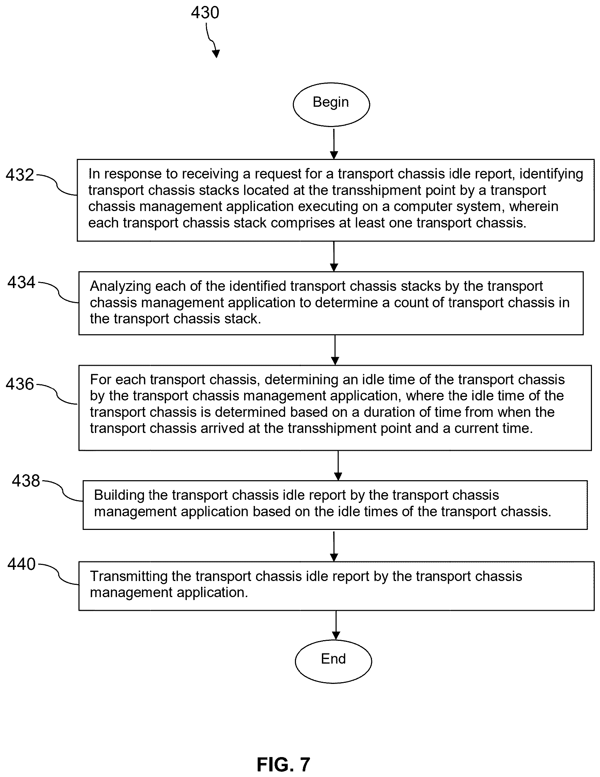

Turning now to FIG. 7, a method 430 is described. In an embodiment, the method 430 is a method of managing a supply of transport chassis to pick-up intermodal containers at a transshipment point. In an embodiment, the transshipment point is one of a railyard or a port. At block 432, the method 430 comprises, in response to receiving a request for a transport chassis idle report, identifying transport chassis stacks located at the transshipment point by a transport chassis management application executing on a computer system, wherein each transport chassis stack comprises at least one transport chassis. In an embodiment, each transport chassis stack is disposed in a park stacking configuration. In an embodiment, the request for the transport chassis idle report identifies a period of time over which idle times are to be determined. In an embodiment, the request for the transport chassis idle report identifies transport chassis stacks located at the transshipment point by identifying an operating company associated with the transport chassis stacks. The operating company may be a trucking company that owns the transport chassis and coordinates drivers to haul the transport chassis when unloaded to the transshipment point and away from the transshipment point when loaded with a container. In an embodiment, the request for the transport chassis idle report identifies a plurality of transshipment points and determining the idle time of the transport chassis by the transport chassis management application comprises determining idle times of transport chassis at each of the plurality of identified transshipment points.

At block 434, the method 430 comprises analyzing each of the identified transport chassis stacks by the transport chassis management application to determine a count of transport chassis in the transport chassis stack. At block 436, the method 430 comprises, for each transport chassis, determining an idle time of the transport chassis by the transport chassis management application, where the idle time of the transport chassis is determined based on a duration of time from when the transport chassis arrived at the transshipment point and a current time. In an embodiment, the method 430 further comprises the transport chassis management application monitoring the locations of a plurality of transport chassis over time and storing the locations of the plurality of transport chassis in a data store.

At block 438, the method 430 comprises building the transport chassis idle report by the transport chassis management application based on the idle times of the transport chassis. At block 440, the method 430 comprises transmitting the transport chassis idle report by the transport chassis management application. The idle report may be transmitted to a user interface of a user equipment (e.g., a mobile phone, a smart phone, a personal digital assistant (PDA), a wearable computer, a headset computer, a laptop computer, a tablet computer, a notebook computer, or an electronic pad). The idle report may be transmitted to a user interface of a workstation (e.g., a laptop computer, a tablet computer, a notebook computer, an electronic pad, a desktop computer, or a computer terminal). The idle report may then be used to judge whether transport chassis management is meeting its goals or whether adjustments to management and coordination of transport chassis should be made to use the transport chassis assets more effectively and/or to reduce idle time of transport chassis.

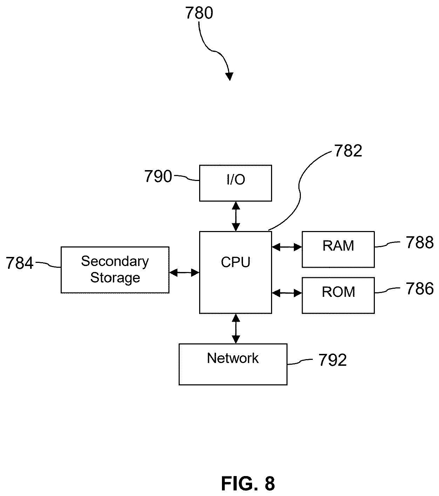

FIG. 8 illustrates a computer system 780 suitable for implementing one or more embodiments disclosed herein. In an embodiment, the computer 166 may be implemented in a form substantially similar to the computer system 780. In an embodiment, the workstations 172 may be implemented in a form substantially similar to the computer system 780. The computer system 780 includes a processor 782 (which may be referred to as a central processor unit or CPU) that is in communication with memory devices including secondary storage 784, read only memory (ROM) 786, random access memory (RAM) 788, input/output (I/O) devices 790, and network connectivity devices 792. The processor 782 may be implemented as one or more CPU chips.

It is understood that by programming and/or loading executable instructions onto the computer system 780, at least one of the CPU 782, the RAM 788, and the ROM 786 are changed, transforming the computer system 780 in part into a particular machine or apparatus having the novel functionality taught by the present disclosure. It is fundamental to the electrical engineering and software engineering arts that functionality that can be implemented by loading executable software into a computer can be converted to a hardware implementation by well-known design rules. Decisions between implementing a concept in software versus hardware typically hinge on considerations of stability of the design and numbers of units to be produced rather than any issues involved in translating from the software domain to the hardware domain. Generally, a design that is still subject to frequent change may be preferred to be implemented in software, because re-spinning a hardware implementation is more expensive than re-spinning a software design. Generally, a design that is stable that will be produced in large volume may be preferred to be implemented in hardware, for example in an application specific integrated circuit (ASIC), because for large production runs the hardware implementation may be less expensive than the software implementation. Often a design may be developed and tested in a software form and later transformed, by well-known design rules, to an equivalent hardware implementation in an application specific integrated circuit that hardwires the instructions of the software. In the same manner as a machine controlled by a new ASIC is a particular machine or apparatus, likewise a computer that has been programmed and/or loaded with executable instructions may be viewed as a particular machine or apparatus.

Additionally, after the system 780 is turned on or booted, the CPU 782 may execute a computer program or application. For example, the CPU 782 may execute software or firmware stored in the ROM 786 or stored in the RAM 788. In some cases, on boot and/or when the application is initiated, the CPU 782 may copy the application or portions of the application from the secondary storage 784 to the RAM 788 or to memory space within the CPU 782 itself, and the CPU 782 may then execute instructions that the application is comprised of. In some cases, the CPU 782 may copy the application or portions of the application from memory accessed via the network connectivity devices 792 or via the I/O devices 790 to the RAM 788 or to memory space within the CPU 782, and the CPU 782 may then execute instructions that the application is comprised of. During execution, an application may load instructions into the CPU 782, for example load some of the instructions of the application into a cache of the CPU 782. In some contexts, an application that is executed may be said to configure the CPU 782 to do something, e.g., to configure the CPU 782 to perform the function or functions promoted by the subject application. When the CPU 782 is configured in this way by the application, the CPU 782 becomes a specific purpose computer or a specific purpose machine.

The secondary storage 784 is typically comprised of one or more disk drives or tape drives and is used for non-volatile storage of data and as an over-flow data storage device if RAM 788 is not large enough to hold all working data. Secondary storage 784 may be used to store programs which are loaded into RAM 788 when such programs are selected for execution. The ROM 786 is used to store instructions and perhaps data which are read during program execution. ROM 786 is a non-volatile memory device which typically has a small memory capacity relative to the larger memory capacity of secondary storage 784. The RAM 788 is used to store volatile data and perhaps to store instructions. Access to both ROM 786 and RAM 788 is typically faster than to secondary storage 784. The secondary storage 784, the RAM 788, and/or the ROM 786 may be referred to in some contexts as computer readable storage media and/or non-transitory computer readable media.

I/O devices 790 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 792 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards, and/or other well-known network devices. The network connectivity devices 792 may provide wired communication links and/or wireless communication links (e.g., a first network connectivity device 792 may provide a wired communication link and a second network connectivity device 792 may provide a wireless communication link). Wired communication links may be provided in accordance with Ethernet (IEEE 802.3), Internet protocol (IP), time division multiplex (TDM), data over cable service interface specification (DOCSIS), wavelength division multiplexing (WDM), and/or the like. In an embodiment, the radio transceiver cards may provide wireless communication links using protocols such as code division multiple access (CDMA), global system for mobile communications (GSM), long-term evolution (LTE), WiFi (IEEE 802.11), Bluetooth, Zigbee, narrowband Internet of things (NB IoT), near field communications (NFC), radio frequency identity (RFID). The radio transceiver cards may promote radio communications using 5G, 5G New Radio, or 5G LTE radio communication protocols. These network connectivity devices 792 may enable the processor 782 to communicate with the Internet or one or more intranets. With such a network connection, it is contemplated that the processor 782 might receive information from the network, or might output information to the network in the course of performing the above-described method steps. Such information, which is often represented as a sequence of instructions to be executed using processor 782, may be received from and outputted to the network, for example, in the form of a computer data signal embodied in a carrier wave.

Such information, which may include data or instructions to be executed using processor 782 for example, may be received from and outputted to the network, for example, in the form of a computer data baseband signal or signal embodied in a carrier wave. The baseband signal or signal embedded in the carrier wave, or other types of signals currently used or hereafter developed, may be generated according to several methods well-known to one skilled in the art. The baseband signal and/or signal embedded in the carrier wave may be referred to in some contexts as a transitory signal.

The processor 782 executes instructions, codes, computer programs, scripts which it accesses from hard disk, floppy disk, optical disk (these various disk-based systems may all be considered secondary storage 784), flash drive, ROM 786, RAM 788, or the network connectivity devices 792. While only one processor 782 is shown, multiple processors may be present. Thus, while instructions may be discussed as executed by a processor, the instructions may be executed simultaneously, serially, or otherwise executed by one or multiple processors. Instructions, codes, computer programs, scripts, and/or data that may be accessed from the secondary storage 784, for example, hard drives, floppy disks, optical disks, and/or other device, the ROM 786, and/or the RAM 788 may be referred to in some contexts as non-transitory instructions and/or non-transitory information.

In an embodiment, the computer system 780 may comprise two or more computers in communication with each other that collaborate to perform a task. For example, but not by way of limitation, an application may be partitioned in such a way as to permit concurrent and/or parallel processing of the instructions of the application. Alternatively, the data processed by the application may be partitioned in such a way as to permit concurrent and/or parallel processing of different portions of a data set by the two or more computers. In an embodiment, virtualization software may be employed by the computer system 780 to provide the functionality of a number of servers that is not directly bound to the number of computers in the computer system 780. For example, virtualization software may provide twenty virtual servers on four physical computers. In an embodiment, the functionality disclosed above may be provided by executing the application and/or applications in a cloud computing environment. Cloud computing may comprise providing computing services via a network connection using dynamically scalable computing resources. Cloud computing may be supported, at least in part, by virtualization software. A cloud computing environment may be established by an enterprise and/or may be hired on an as-needed basis from a third party provider. Some cloud computing environments may comprise cloud computing resources owned and operated by the enterprise as well as cloud computing resources hired and/or leased from a third party provider.

In an embodiment, some or all of the functionality disclosed above may be provided as a computer program product. The computer program product may comprise one or more computer readable storage medium having computer usable program code embodied therein to implement the functionality disclosed above. The computer program product may comprise data structures, executable instructions, and other computer usable program code. The computer program product may be embodied in removable computer storage media and/or non-removable computer storage media. The removable computer readable storage medium may comprise, without limitation, a paper tape, a magnetic tape, magnetic disk, an optical disk, a solid-state memory chip, for example analog magnetic tape, compact disk read only memory (CD-ROM) disks, floppy disks, jump drives, digital cards, multimedia cards, and others. The computer program product may be suitable for loading, by the computer system 780, at least portions of the contents of the computer program product to the secondary storage 784, to the ROM 786, to the RAM 788, and/or to other non-volatile memory and volatile memory of the computer system 780. The processor 782 may process the executable instructions and/or data structures in part by directly accessing the computer program product, for example by reading from a CD-ROM disk inserted into a disk drive peripheral of the computer system 780. Alternatively, the processor 782 may process the executable instructions and/or data structures by remotely accessing the computer program product, for example by downloading the executable instructions and/or data structures from a remote server through the network connectivity devices 792. The computer program product may comprise instructions that promote the loading and/or copying of data, data structures, files, and/or executable instructions to the secondary storage 784, to the ROM 786, to the RAM 788, and/or to other non-volatile memory and volatile memory of the computer system 780.

In some contexts, the secondary storage 784, the ROM 786, and the RAM 788 may be referred to as a non-transitory computer readable medium or a computer readable storage media. A dynamic RAM embodiment of the RAM 788, likewise, may be referred to as a non-transitory computer readable medium in that while the dynamic RAM receives electrical power and is operated in accordance with its design, for example during a period of time during which the computer system 780 is turned on and operational, the dynamic RAM stores information that is written to it. Similarly, the processor 782 may comprise an internal RAM, an internal ROM, a cache memory, and/or other internal non-transitory storage blocks, sections, or components that may be referred to in some contexts as non-transitory computer readable media or computer readable storage media.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted or not implemented.

Also, techniques, systems, subsystems, and methods described and illustrated in the various embodiments as discrete or separate may be combined or integrated with other systems, modules, techniques, or methods without departing from the scope of the present disclosure. Other items shown or discussed as directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method of managing a supply of transport chassis to pick-up intermodal containers at a transshipment point, comprising:
defining a boundary area by a user interface executing on a user equipment (UE), wherein the boundary area is co-located with the transshipment point;
defining a carrier in-bound to or co-located with the transshipment point by the user interface on the UE, wherein the carrier is carrying a plurality of intermodal containers;
in response to receiving an input selection, transmitting a request for a report on a supply of transport chassis by the UE to a transport chassis management application executing on a computer system, wherein the request comprises a boundary area definition and a carrier definition, whereby the transport chassis management application
determines a number of transport chassis disposed within the boundary area,
determines a number of intermodal containers disposed on the carrier, and
returns to the UE the report on the supply of transport chassis that indicates the number of transport chassis disposed within the boundary area and the number of intermodal containers disposed on the carrier;
receiving by the UE the report on the supply of transport chassis; and
based on the report on the supply of transport chassis, presenting by the user interface of the UE an indication of a correlation between the number of transport chassis disposed within the boundary area and the number of intermodal containers disposed on the carrier.

2. The method of claim 1, wherein the transport chassis management application determines the number of transport chassis disposed within the boundary area based on the boundary area definition, based on determining a number of transport chassis stacks disposed within the boundary area, and based on determining, for each transport chassis stack, a number of transport chassis in the transport chassis stack.

3. The method of claim 2, wherein determining by the transport chassis management application the number of transport chassis disposed within the boundary area comprises determining for each of a plurality of different transport chassis types a number of transport chassis of that type disposed within the boundary area, wherein determining by the transport chassis management application the number of intermodal containers disposed on the carrier comprises determining for each of a plurality of different container types a number of intermodal containers of that type on the carrier, and wherein the report on the supply of transport chassis comprises information on the relationships between the relationship between the numbers of transport chassis of each type and the numbers of containers of each type associated with the transport chassis type.

4. The method of any one of claims 1 to 3, wherein the carrier is a ship and the transshipment point is a port; or
wherein the carrier is a train and the transshipment point is a railyard.

5. The method of any one of claims 1 to 4, wherein the UE is a mobile phone, a smart phone, a personal digital assistant (PDA), a wearable computer, a headset computer, a laptop computer, a notebook computer, a tablet computer, or an electronic pad.

6. The method of any one of claims 1 to 5, wherein the intermodal containers each have a securing mechanism that is configured for mating with a corresponding securing mechanism of a transport chassis.

7. A method of managing a supply of transport chassis to pick-up intermodal containers at a transshipment point, comprising:
in response to receiving a request for a transport chassis idle report, identifying transport chassis stacks located at the transshipment point by a transport chassis management application executing on a computer system, wherein each transport chassis stack comprises at least one transport chassis;
analyzing each of the identified transport chassis stacks by the transport chassis management application to determine a count of transport chassis in the transport chassis stack;
for each transport chassis, determining an idle time of the transport chassis by the transport chassis management application, where the idle time of the transport chassis is determined based on a duration of time from when the transport chassis arrived at the transshipment point and a current time;
building the transport chassis idle report by the transport chassis management application based on the idle times of the transport chassis; and
transmitting the transport chassis idle report by the transport chassis management application.

8. The method of claim 7, wherein each transport chassis stack is disposed in a park stacking configuration.

9. The method of claim 7 or 8, wherein the request for the transport chassis idle report identifies a period of time over which idle times are to be determined; and/or wherein the request for the transport chassis idle report identifies transport chassis stacks located at the transshipment point by identifying an operating company associated with the transport chassis stacks; and/or
wherein the request for the transport chassis idle report identifies a plurality of transshipment points and determining the idle time of the transport chassis by the transport chassis management application comprises determining idle times of transport chassis at each of the plurality of identified transshipment points.

10. The method of any one of claims 7 to 9, further comprising the transport chassis management application monitoring the locations of a plurality of transport chassis over time and storing the locations of the plurality of transport chassis in a data store.

11. The method of any one of claims 7 to 10, wherein the transshipment point is one of a railyard or a port.

12. A system for managing a supply of transport chassis to pick-up intermodal containers at a transshipment point, comprising:
a processor;
a non-transitory memory; and
an application stored in the non-transitory memory that, when executed by the processor
tracks a status of transport chassis stacks at each of a plurality of transshipment points,
tracks movement of intermodal containers en route to the plurality of transshipment points,
receives a request for a report on a supply of transport chassis at one of the transshipment points, wherein the request identifies the one of the transshipment points and identifies a carrier of intermodal containers en route to the identified one of the transshipment points
determines a number and type of transport chassis disposed at the identified one of the transshipment points,
determines a number and type of intermodal containers associated with the identified carrier of intermodal containers en route to the identified one of the transshipment points,
for each type of intermodal container associated with the identified carrier of intermodal containers en route to the identified one of the transshipment points, determines if a sufficient number of transport chassis of matching type are disposed at the identified one of the transshipment points,
generates a report about the numbers of transport chassis of matching types at the identified one of the transshipment points versus the numbers of intermodal containers associated with the identified carrier of intermodal containers en route to the identified one of the transshipment points; and
transmits the report on the supply of transport chassis at the one of the transshipment points.

13. The system of claim 12, wherein the type of transport chassis is associated with a securing mechanism of the transport chassis; and/or
wherein the type of container is associated with a securing mechanism of the container.

14. The system of claim 12 or 13, wherein the application sends a notification that a shortfall of transport chassis at the identified one of the transshipment points is predicted when the number of transport chassis is not at least equal to the number of intermodal carriers on route to the identified one of the transshipment points.

15. The system of any one of claims 12 to 14, wherein the application determines the number and type of transport chassis disposed at the identified one of the transshipment points based on both the number of transport chassis currently disposed at one of the transshipment points and the number and type of transport chassis predicted to be at the identified one of the transshipment points when the identified carrier of intermodal containers is expected to arrive at the one of the transshipment points.
